# FASCICULE DE BREVET EUROPEEN

(11) **EP 1 952 005 B1**
(45) Date de publication et mention de la délivrance du brevet: **31.08.2016**
(21) Numéro de dépôt: 05818283.3
(22) Date de dépôt: 21.11.2005
(51) Int. Cl.: F02K 1/76

(54) **PROCEDE DE COMMANDE POUR L'ACTIONNEMENT D'UN INVERSEUR DE POUSSEE**
VERFAHREN ZUM STEUERN EINER SCHUBUMKEHRVORRICHTUNG
CONTROL METHOD FOR ACTUATING A THRUST REVERSER

(43) Date de publication de la demande: 06.08.2008
(73) Titulaire: Aircelle, 76700 Gonfreville L'Orcher (FR)
(72) Inventeur: DEHU, Michel Philippe, F-31170 TOURNEFEUILLE (FR); METEZEAU, Fabrice Henri Emile, F-76290 MONTIVILLIERS (FR)
(74) Mandataire: Jouanneau, Lionel
(86) Numéro de dépôt international: PCT/FR2005/002883
(87) Numéro de publication internationale: WO 2007/057524

(56) Documents cités:
- EP-A- 0 466 316
- EP-A- 0 843 089
- EP-A- 1 280 029
- US-A1- 2003 019 206

## Description

La présente invention se rapporte à un procédé de commande d'un inverseur de poussée de turboréacteur, mettant en oeuvre au moins un capot mobile pouvant être déplacé au moyen d'au moins un moteur électrique. L'invention se rapporte également à un inverseur de poussée adapté à un tel procédé de commande.

Le rôle d'un inverseur de poussée lors de l'atterrissage d'un avion est d'améliorer la capacité de freinage d'un avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre-poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct. Dans les inverseurs à portes, en revanche, chaque capot mobile pivote de manière à venir bloquer le flux et le dévier et est donc actif dans cette réorientation.

De manière générale, ces capots mobiles sont actionnés par des vérins hydrauliques ou pneumatiques qui nécessitent un réseau de transport d'un fluide sous pression. Ce fluide sous pression est classiquement obtenu soit par piquage d'air sur le turboréacteur dans le cas d'un système pneumatique, soit par prélèvement sur le circuit hydraulique de l'avion. De tels systèmes requièrent une maintenance importante car la moindre fuite dans le réseau hydraulique ou pneumatique peut être difficilement détectable et risque d'avoir des conséquences dommageables tant sur l'inverseur que sur d'autres parties de la nacelle. Par ailleurs, en raison de l'espace réduit disponible dans le cadre avant de l'inverseur, la mise en place et la protection d'un tel circuit sont particulièrement délicates et encombrantes.

Un autre inconvénient des systèmes hydrauliques et pneumatiques est que les vérins ou le moteur délivrent toujours la puissance maximale pour laquelle ils ont été dimensionnés et qui doit correspondre à la puissance nécessaire pour assurer l'ouverture ou la fermeture de l'inverseur dans des situations d'atterrissage ou de décollage à fort chargement. Plus précisément, il s'agit en particulier de l'ouverture (ou déploiement) en cas de décollage avorté (Aborted Take-Off), et de la fermeture (ou escamotage) en cas d'atterrissage avorté (Aborted Landing), cas qui nécessitent une puissance motrice beaucoup plus importante que dans les cas normaux pour vaincre les contraintes liées à un régime du turboréacteur très élevé. Il s'agit notamment de pouvoir fournir une puissance suffisante pour, à l'ouverture d'une part, vaincre la dépression élevée créé par le flux direct qui s'oppose au début de l'ouverture du capot mobile et au décrochement de son joint de fermeture, et à la fermeture d'autre part, vaincre des efforts aérodynamiques contraires plus élevés. Bien que rares, ces cas de fonctionnement doivent bien évidemment être pris en compte pour des raisons de sécurité.

La puissance délivrée par les vérins étant toujours la puissance maximale nécessaire pour assurer le fonctionnement de l'inverseur dans ces cas à fort chargement, les charges s'exerçant sur la structure et les équipements sont toujours les charges les plus élevées, entraînant par conséquent une usure en fatigue prématurée des différents composants de l'inverseur. Par ailleurs, en cas de blocage d'une pièce de l'inverseur, les charges dynamiques et statiques seront également très élevées.

Par exemple, en cas de blocage des verrous assurant la fermeture de l'inverseur, les charges dynamiques dues à un choc du capot mobile en mouvement seront très importantes. Le verrou doit être dimensionné pour pouvoir résister à ce choc avec un moteur (ou un système) lancé à pleine vitesse et à pleine puissance. Il sera donc nécessaire de sur-dimensionner ce verrou au détriment de la masse de l'ensemble. Le même raisonnement peut s'appliquer à d'autres pièces de l'inverseur.

Plus précisément, avec un système pneumatique ou hydraulique, la probabilité d'occurrence d'un choc à pleine puissance est égale à la probabilité de blocage de l'inverseur puisque la pleine puissance est délivrée à chaque utilisation. Selon les normes des constructeurs, un blocage de l'inverseur est donc un cas limite dont la probabilité d'occurrence est trop grande pour pouvoir admettre une déformation plastique des pièces. La solution pour éviter de telles déformations est de sur-dimensionner les pièces de l'inverseur de poussée au détriment de la masse de l'ensemble.

Il convient ici de noter que la masse des équipements est un point essentiel de la construction aéronautique, et que l'inverseur constitue le sous-ensemble de la nacelle le plus important en masse. Il est donc avantageux de chercher à diminuer cette masse au maximum, tout en respectant les normes de sécurité et de résistance.

Pour pallier les inconvénients liés aux systèmes pneumatiques et hydrauliques, les constructeurs d'inverseurs de poussée ont cherché à les remplacer et à équiper au maximum leurs inverseurs d'actionneurs électromécaniques, plus légers et plus fiables. Un tel inverseur est décrit dans le document EP 0 843 089. Cependant, la question des efforts s'exerçant sur la structure n'est pas entièrement résolue car il est toujours nécessaire que les moteurs électriques soient capables d'assurer le fonctionnement de l'inverseur dans les cas à fort chargement.

Voir aussi le document US-A-2003/0019206.

La présente invention a pour but de remédier aux inconvénients précédemment évoqués, et notamment d'optimiser le gain en masse permis par l'utilisation d'actionneurs électromécaniques, ainsi que d'améliorer la longévité de l'inverseur de poussée, et consiste pour cela en un procédé de commande pour l'ouverture ou la fermeture d'un inverseur de poussée de turboréacteur, mettant en oeuvre au moins un capot mobile pouvant être déplacé au moyen d'au moins un moteur électrique, caractérisé en ce qu'il comprend, pour la phase d'ouverture et/ou de fermeture, les étapes suivantes visant à :
- analyser au moins un paramètre représentatif de la pression dans la veine du turboréacteur,
- exécuter une séquence de fonctionnement dans laquelle les paramètres de fonctionnement du moteur électrique sont adaptés à la situation.

Ainsi, lorsque l'inverseur de poussée doit être actionné dans un cas où des efforts importants devront être fournis, c'est-à-dire en cas d'Aborted Take-Off ou d'Aborted Landing par exemple, l'analyse d'un paramètre représentatif de la pression dans la veine du turboréacteur, significative du régime de fonctionnement et des efforts à fournir pour l'ouverture ou la fermeture de l'inverseur, permet de détecter la survenue de ces situations et d'adapter en conséquence les paramètres de la séquence d'ouverture ou de fermeture dudit inverseur. Corollairement, l'analyse du paramètre représentatif permet donc de ne pas exécuter inutilement la séquence de fonctionnement avec des paramètres de fonctionnement du moteur électrique qui ne sont pas nécessaires en cas d'actionnement normal. Ce faisant, les paramètres de fonctionnement destinés à des cas à fort chargement ne sont plus systématiquement appliqués, mais uniquement réservés aux cas à fort chargement. La probabilité d'occurrence d'un choc à forte puissance moteur se trouve, grâce au procédé selon l'invention, considérablement amoindrie puisque cet événement n'est susceptible de se produire que dans les cas où cette forte puissance est requise compte tenu du paramètre représentatif. La survenue d'un choc à pleine puissance n'est donc plus un cas limite puisque la probabilité d'occurrence d'un blocage de l'inverseur se trouve, grâce au procédé selon l'invention, multipliée par la probabilité qu'à l'inverseur de fonctionner dans une situation à fort chargement et est donc grandement diminuée. Selon les normes constructeur, il s'agit d'un cas ultime qui admet une certaine déformation plastique des pièces, ce qui permet de réduire le dimensionnement de certaines pièces.

Préférentiellement, le paramètre représentatif analysé est obtenu à partir du régime de l'arbre compresseur basse pression du turboréacteur. Le paramètre représentatif peut être, selon le type de turboréacteur, directement la vitesse de rotation de l'arbre elle-même, ou une vitesse réduite de celui-ci si un réducteur est disposé entre l'arbre compresseur et une soufflante. En effet, seule la vitesse de rotation réellement transmise à la soufflante est un paramètre représentatif de la pression de la veine de flux du turboréacteur. Cette grandeur peut être facilement obtenue par l'intermédiaire du système électronique contrôlant le turboréacteur (FADEC ; Full Authority Digital Engine Control). Bien évidemment, d'autres grandeurs peuvent être utilisées comme, par exemple, la pression d'air dans le turboréacteur. Il est également possible d'analyser plusieurs paramètres représentatifs, tel que par exemple la vitesse de rotation réduite de l'arbre basse pression corrigée par les valeurs de la température et de la pression ambiante, afin d'obtenir une analyse plus fine et plus fiable.

Avantageusement, la séquence exécutée est choisie parmi au moins deux séquences prédéterminées correspondant respectivement aux cas où le turboréacteur fonctionne à bas régime et à haut régime. Par bas régime du turboréacteur, sont visés les régimes de fonctionnement du turboréacteur lors d'un déploiement ou d'un escamotage normal de l'inverseur, ainsi que les cas de manoeuvre de l'inverseur lors d'opérations de maintenance, le turboréacteur ne fonctionnant alors pas. Ce régime correspond généralement à des vitesses de rotation de l'arbre compresseur basse pression inférieures à environ 30 à 40% de la vitesse maximale fixée par le constructeur du turboréacteur. Cette valeur n'est pas une référence absolue et pourra être adaptée selon les caractéristiques du turboréacteur et selon les efforts réels s'exerçant sur les capots mobiles en mouvement. Inversement, les vitesses de rotation de l'arbre compresseur basse pression supérieures à environ 30 à 40% de la vitesse maximale correspondent à un haut régime. Il convient également de noter que cette valeur de séparation entre haut et bas régimes n'est pas nécessairement identique pour les phases d'ouverture et de fermeture.

En effet, comme expliqué précédemment, à l'ouverture, il s'agira essentiellement de fournir la puissance nécessaire au décrochage du capot mobile, tandis qu'à la fermeture, il s'agira plutôt de vaincre le flux d'air extérieur s'opposant à la fermeture du capot mobile. Les progressions de ces deux contraintes en fonction du régime du turboréacteur ne sont pas identiques et il sera donc intéressant de prévoir des valeurs de séparation bas régime / haut régime différentes à l'ouverture et à la fermeture.

Avantageusement, lors de l'exécution de la séquence de fonctionnement, le moteur électrique délivre un couple inférieur ou égal à une valeur limite maximale. Ainsi, le couple délivré par le moteur électrique pour actionner les capots mobiles est taré et peut être limité au couple nécessaire et suffisant pour déplacer les capots mobiles dans les conditions du régime du turboréacteur. Contrairement aux systèmes pneumatiques ou hydrauliques précédemment décrits, la puissance d'un moteur électrique dépend du courant d'alimentation de ce moteur et peut être régulée pour ne délivrer sa puissance maximale qu'en cas de nécessité. En limitant l'application d'un couple élevé aux cas à fort chargement, la probabilité pour l'inverseur de devoir supporter des charges statiques élevées en cas de blocage sera grandement réduite puisqu'elle se trouve multipliée par la probabilité d'être dans un cas à fort chargement. L'usure et la fatigue des pièces de l'inverseur sont donc diminuées et, par voie de conséquence, sa résistance et sa longévité s'en trouvent améliorées.

De manière préférentielle, lorsque la valeur du paramètre représentatif du régime du turboréacteur est comprise dans une plage prédéterminée, la valeur limite maximale du couple délivré par le moteur électrique est déterminée par l'application d'une fonction affine à la valeur du paramètre représentatif. De cette manière, il est possible de prévoir au moins un séquence de fonctionnement qui sera exécutée pour des régimes de fonctionnement du turboréacteur intermédiaire. Ceci permet d'avoir une adaptation plus fine des paramètres de la séquence d'ouverture.

De manière encore plus avantageuse, la séquence de fonctionnement exécutée pour un turboréacteur fonctionnant à bas régime comprend une étape de test de l'état de fonctionnement (rotation) du moteur électrique qui, en cas de non fonctionnement de ce dernier (absence de rotation), entraînera l'application de la séquence prévue pour un turboréacteur fonctionnant à un régime plus élevé. Une telle étape est particulièrement utile si l'analyse du paramètre représentatif du régime du turboréacteur n'est pas possible ou est erronée et que la séquence exécutée est celle prévue pour un turboréacteur fonctionnant à bas régime. Dans ce cas, si cette séquence se révèle inadaptée, la séquence prévue pour les cas à fort chargement sera exécutée.

Avantageusement encore, la vitesse du moteur est limitée au moins au début de la séquence de fonctionnement exécutée. En limitant la vitesse, on limite les charges dynamiques et les effets d'inertie susceptibles de s'exercer sur la structure de l'inverseur en cas de blocage. Une fois les pièces sensibles, telles les verrous, dépassées, il est possible de fixer une deuxième consigne de vitesse supérieure.

Préférentiellement la séquence de fonctionnement appliquée comprend au moins une étape de contrôle et de régulation de la vitesse.

Préférentiellement encore, la séquence de fonctionnement comprend une boucle de contrôle de l'état de fonctionnement du moteur électrique apte à commander l'arrêt de celui-ci. Ainsi, en cas de détection d'un blocage, le moteur électrique peut-être stoppé ou maintenu dans un état d'attente.

Avantageusement, il est prévu d'enclencher une séquence de fonctionnement par défaut si le paramètre représentatif ne peut être analysé. Cette séquence par défaut pourra être une séquence identique à l'une des séquences de fonctionnement proposées ou être une séquence spécifique.

La présente invention consiste également en un inverseur de poussée comprenant au moins un capot mobile pouvant être déplacé sous l'action d'au moins un moteur électrique, caractérisé en ce que le moteur électrique est piloté par au moins une interface de commande apte, successivement, à analyser au moins un paramètre représentatif du régime du turboréacteur, et à délivrer au moins une consigne de fonctionnement adaptée.

De manière préférentielle, l'interface de commande est connectée à un boîtier de commande du turboréacteur délivrant le paramètre représentatif.

Avantageusement, le moteur électrique est un moteur synchrone autopiloté. Un tel moteur électrique est particulièrement adapté à un pilotage en couple et/ou en vitesse. De plus, la vitesse de rotation et le couple délivré sont aisément mesurables.

Avantageusement encore, le moteur électrique est piloté en couple à vitesse constante. Préférentiellement, l'interface comprend des moyens de régulation du couple délivré par le moteur électrique.

De manière avantageuse, l'interface de commande est apte à recevoir une consigne de vitesse et à la convertir en une instruction de couple qu'elle délivre au moteur électrique. Préférentiellement, l'interface de commande comprend des moyens de régulation de la vitesse du moteur électrique.

La mise en oeuvre de l'invention sera mieux comprise à l'aide de la description détaillée qui est exposée ci-dessous en regard du dessin annexé dans lequel :
La figure 1 est une vue schématique partielle en perspective d'une nacelle intégrant un inverseur de poussée à grille.
La figure 2 est une représentation schématique des capots mobiles et de leur système d'actionnement.
La figure 3 est un diagramme représentant les étapes de fonctionnement d'un procédé de commande selon l'invention pour l'ouverture d'un inverseur de poussée.
La figure 4 est un diagramme représentant les étapes de fonctionnement d'un procédé de commande selon l'invention pour la fermeture d'un inverseur de poussée.
La figure 5 est une courbe représentant le couple limite maximal autorisé en phase d'ouverture de l'inverseur en fonction du régime du turboréacteur.
La figure 6 est une courbe représentant le couple limite maximal autorisé en phase de fermeture de l'inverseur en fonction du régime du turboréacteur.
La figure 7 est une représentation simplifiée de l'architecture d'une interface de commande équipant un inverseur selon l'invention.

Avant de décrire en détail un mode de réalisation de l'invention, il est important de préciser que celle-ci n'est pas limitée à un type d'inverseur en particulier. Bien qu'illustrée par un inverseur à grilles, elle pourra être mise en oeuvre avec des inverseurs de conceptions différentes, notamment à portes.

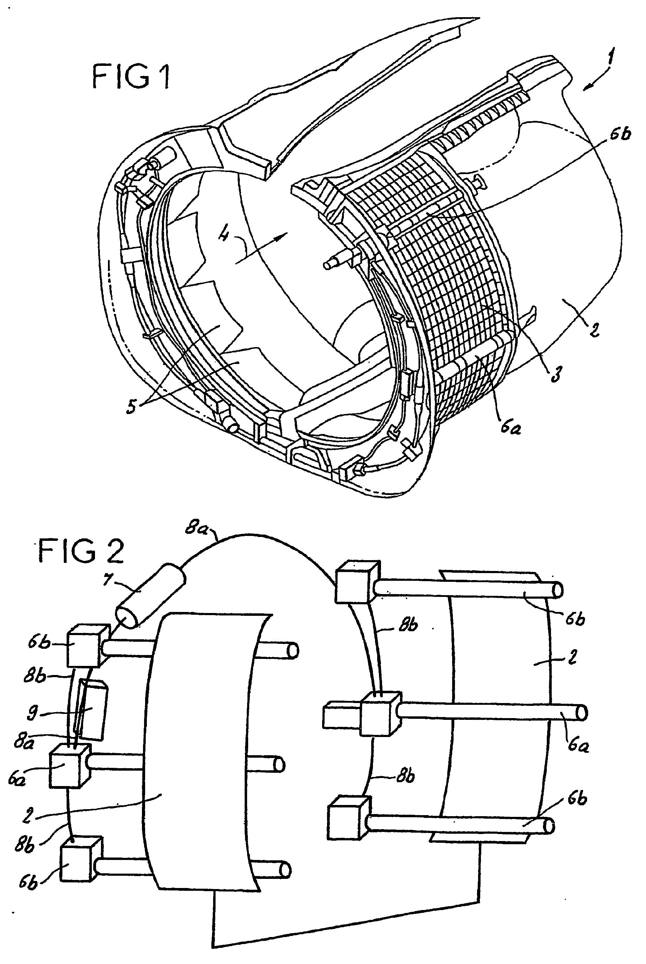

La figure 1 présente une vue schématique partielle d'une nacelle intégrant un inverseur de poussée 1. Le turboréacteur n'est pas représenté. Cet inverseur de poussée 1 possède une structure comprenant deux capots mobiles 2 semi-circulaires susceptibles de coulisser pour découvrir des grilles 3 d'aubes de déviation placées entre les capots mobiles 2 et une section de passage du flux d'air 4 à dévier. Des portes de blocage 5 sont disposées à l'intérieur de la structure de manière à pouvoir pivoter et passer d'une position dans laquelle elles ne gênent pas le passage du flux d'air 4 à une position dans laquelle elles bloquent ce passage. Afin de coordonner l'ouverture des capots mobiles 2 avec une position obturante des portes de blocage 5, celles-ci sont mécaniquement reliées au capot mobile 2 par des charnières et à la structure fixe par un système de bielles (non représentées).

Le déplacement des capots mobiles 2 le long de l'extérieur de la structure est assurée par un ensemble de vérins 6a, 6b montés sur un cadre avant à l'intérieur duquel sont logés un moteur électrique 7 et des arbres flexibles de transmission 8a, 8b respectivement connectés aux vérins 6a, 6b pour les actionner.

Le système d'actionnement des capots mobiles 2 est représenté seul à la figure 2. Chaque capot mobile 2 peut être translaté sous l'action de trois vérins 6a, 6b, comprenant un vérin central 6a et deux vérins additionnels 6b, actionnés par un unique moteur électrique 7 relié à une interface de commande 9. La puissance délivrée par le moteur électrique 7 est tout d'abord distribuée aux vérins centraux 6a par l'intermédiaire de deux arbres de transmission flexibles 8a, puis aux vérins additionnels 6b par des arbres de transmission flexibles 8b.

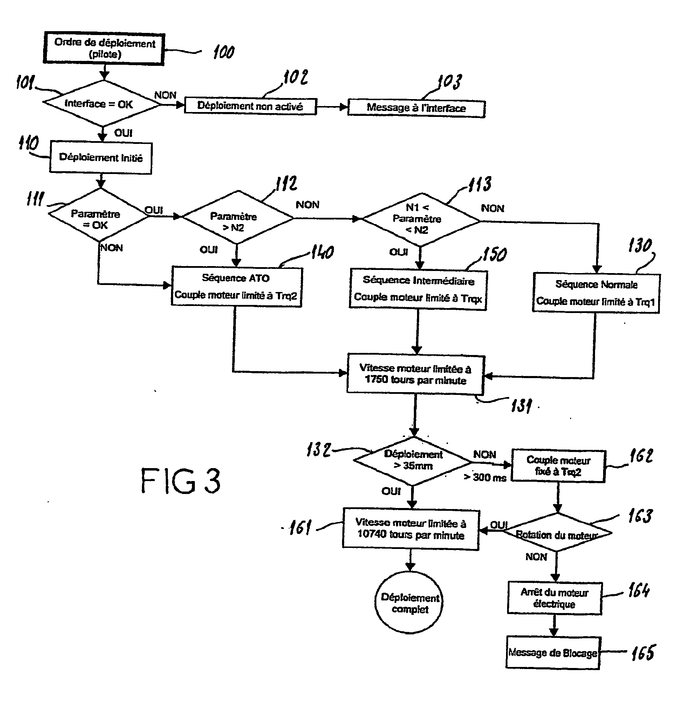

Un diagramme montrant les étapes d'un procédé selon l'invention pour l'ouverture de l'inverseur de poussée 1 est représenté à la figure 3.

Tout d'abord, l'ordre 100 est donné par le pilote de déployer l'inverseur. Cet ordre est suivi d'une étape 101 de contrôle qui va autoriser ou non le déploiement en fonction du statut de l'interface de commande 9. Si la réponse de l'interface de commande 9 est négative alors celle-ci avorte 102 le déploiement et un message 103 est renvoyé par l'interface de commande 9 à destination du tableau de bord. Il convient de noter que certains avionneurs demandent, pour des raisons de sécurité, que le déploiement, ou l'escamotage, soit tenté même si le système n'autorise pas l'ouverture. Dans ce cas, l'étape 101 de contrôle est supprimé et remplacée par une ou plusieurs étapes adaptées à cette demande.

Une réponse positive de l'interface de commande 9 déclenche l'initiation du déploiement 110.

Dans un premier temps, l'interface de commande 9 analyse un paramètre représentatif du régime de fonctionnement du turboréacteur obtenu d'un FADEC (non représenté) équipant le turboréacteur. Cette étape d'analyse comprend une première sous-étape 111, une deuxième sous-étape 112 et une troisième sous-étape 113.

La première sous-étape 111 consiste à tester la disponibilité du paramètre représentatif. Si la valeur de celui-ci ne peut être obtenue, alors une séquence de fonctionnement par défaut est enclenchée. Cette séquence par défaut peut être identique ou différente d'une séquence de fonctionnement existante pour des valeurs définies du paramètre représentatif. En l'espèce cette séquence par défaut est identique à une séquence prévue pour les cas de forte charge qui sera décrite ultérieurement.

La deuxième sous-étape 112 et la troisième sous-étape 113 utilisent la valeur du paramètre représentatif. Cette valeur sera exprimée dans l'exemple en pourcentage par rapport au régime maximal du turboréacteur donné par le constructeur. Dans cet exemple, il est prévu trois séquences de fonctionnement comprenant, une séquence de fonctionnement normal 130 destinée à être appliquée si la valeur du paramètre représentatif est inférieure à N1% de la valeur correspondant à un régime maximal du turboréacteur, une séquence de fonctionnement pour cas à fort chargement 140 (Aborted Take-Off dans l'exemple, ATO) destinée à être appliquée si la valeur du paramètre représentatif est supérieure ou égale à N2, et une séquence intermédiaire 150 destinée à être appliquée pour des valeurs du paramètre représentatif comprises entre N1 et N2.

Chaque séquence de fonctionnement 130, 140, 150 va maintenant être décrite.

La séquence de fonctionnement normal 130 comprend des étapes classiques visant à déverrouiller l'inverseur, puis mettre en marche le moteur électrique 7. Cette séquence comprend une boucle de régulation visant à maintenir le couple délivré par le moteur électrique 7 à une valeur inférieure à Trq1. De plus, une boucle de régulation 131 contrôle la vitesse de rotation du moteur électrique 7 et la maintient inférieure à 1750 tours par minute.

Une étape de test 132 analyse la course effectuée par les capots mobiles 2. Si celle si est supérieure à 35mm après environ 300ms, l'ouverture se poursuit, le couple moteur restant limité à Trq1, et un ordre 161 fixe la limitation de vitesse à 10740 tours par minute, la vitesse maximale du moteur dans cet exemple. Dans le cas contraire, c'est-à-dire si les capots mobiles 2 n'ont pas translaté de plus de 35mm en moins d'environ 300ms, cela signifie soit que la puissance du moteur n'est pas suffisante pour ouvrir l'inverseur dans le temps total imparti, soit que le moteur est bloqué. Un ordre 162 fixe alors le couple moteur maximal à Trq2, plus élevé. Il est ensuite procédé à une étape de test 163 visant à déterminer si le moteur électrique 7 fonctionne. Si ce dernier ne fonctionne pas, alors un ordre 164 commande sa mise en veille et un message de blocage est envoyé lors d'une étape 165. Si le moteur électrique 7 fonctionne, l'étape 161 augmentant la vitesse d'ouverture est appliquée et l'ouverture se poursuit jusqu'à son terme.

La séquence de fonctionnement en conditions de fort chargement 140 se différencie de la séquence de fonctionnement normale 130 uniquement par le fait que le couple moteur est limité à Trq2. Il convient de noter que cette séquence de fonctionnement 140 est également la séquence par défaut appliquée lorsque la valeur du paramètre représentatif n'est pas disponible.

La séquence de fonctionnement intermédiaire 150 se distingue de la séquence de fonctionnement 130 uniquement par le fait que le couple moteur est limité à une valeur Trqx déterminée par l'application d'une fonction affine à la valeur du paramètre représentatif. Cette fonction affine est définie telle que, d'une part, la valeur de Trqxpour un paramètre représentatif égal à N1 est égale à Trq1, et d'autre part, la valeur de Trqx pour un paramètre représentatif égal à N2 est égale à Trq2.

Par mesure de sécurité, il est possible de prévoir que la séquence de fonctionnement pour cas à fort chargement 140 comprend une étape de vérification qui envoie un message au tableau de bord lorsque, par exemple, plus de trois séquences de fonctionnement pour cas à fort chargement 140 ont été opérées par défaut.

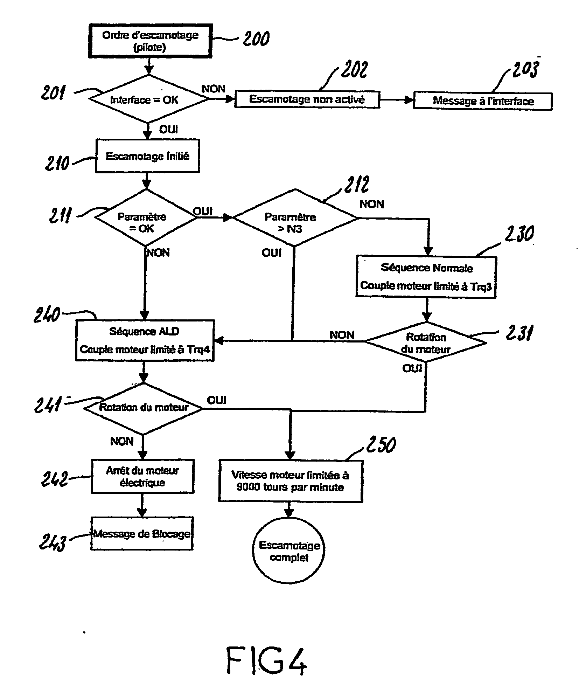

Des étapes de fonctionnement d'un procédé de contrôle selon l'invention pour la fermeture de l'inverseur de poussée 1 sont représentées à la figure 4.

Tout d'abord, l'ordre 200 est donné par le pilote d'escamoter l'inverseur. Cet ordre est suivi d'une étape 201 de contrôle qui va autoriser ou non l'escamotage en fonction du statut de l'interface de commande 9. Si la réponse de l'interface de commande 9 est négative alors celle-ci avorte 202 l'escamotage et un message 203 est renvoyé par l'interface de commande 9 à destination du tableau de bord.

Une réponse positive de l'interface de commande 9 déclenche l'initiation de l'escamotage 210.

Dans un premier temps, l'interface de commande 9 analyse le paramètre représentatif du régime de fonctionnement du turboréacteur obtenu du FADEC. Cette étape d'analyse comprend une première sous-étape 211 et une deuxième sous-étape 212.

La première sous-étape 211 consiste à tester la disponibilité du paramètre représentatif. Si la valeur de celui-ci ne peut être obtenue, alors une séquence de fonctionnement par défaut est enclenchée. En l'espèce cette séquence par défaut est identique à une séquence prévue pour les cas de forte charge et qui sera décrite ultérieurement.

La deuxième sous-étape 112 utilise la valeur du paramètre représentatif pour déterminer la séquence à appliquer entre une séquence de fonctionnement normal 230 et une séquence de fonctionnement pour cas de forte charge 240.

La séquence de fonctionnement normal 230 est appliquée si la valeur du paramètre représentatif est inférieure à une valeur N3 et comprend des étapes classiques visant à mettre en marche le moteur électrique 7 dans le sens de la fermeture de l'inverseur 1. Cette séquence comprend une boucle de régulation visant à maintenir le couple délivré par le moteur électrique 7 à une valeur inférieure à Trq3.

La séquence de fonctionnement pour cas à fort chargement 240 est appliquée si la valeur du paramètre représentatif est supérieure à N3 et se différencie de la séquence de fonctionnement normal 230 uniquement par le fait que le couple moteur est limité à une valeur Trq4 supérieure à Trq3.

Par ailleurs, une étape de test 231 visant à vérifier le fonctionnement du moteur électrique 7 est prévue au début de la séquence de fonctionnement normal 230. Si le moteur ne tourne pas, alors la séquence prévue pour les cas de forts chargements 240 est appliquée. Si le moteur électrique 7 fonctionne, sa vitesse est augmentée par un ordre 250 mais est toutefois limitée à la vitesse maximale du moteur électrique 7, 9000 tours par minute dans l'exemple. Le couple moteur est toujours maintenu inférieur ou égal à Trq3. L'escamotage se poursuit jusqu'à son terme.

La séquence prévue pour les cas à forts chargements 240 comprend également une étape de test 241 visant à analyser le fonctionnement du moteur électrique 7. Si le moteur électrique 7 ne fonctionne pas, un ordre 242 le met en veille. En effet, la mise en veille est préférée à une coupure d'alimentation car les efforts aérodynamiques tendant naturellement à l'ouverture des capots mobiles 2, il est nécessaire de maintenir un couple minimum d'attente. Un ordre 243 envoie ensuite un message à l'interface 9. Si le moteur électrique 7 fonctionne, l'étape 250 est appliquée, et l'escamotage se poursuit jusqu'à son terme.

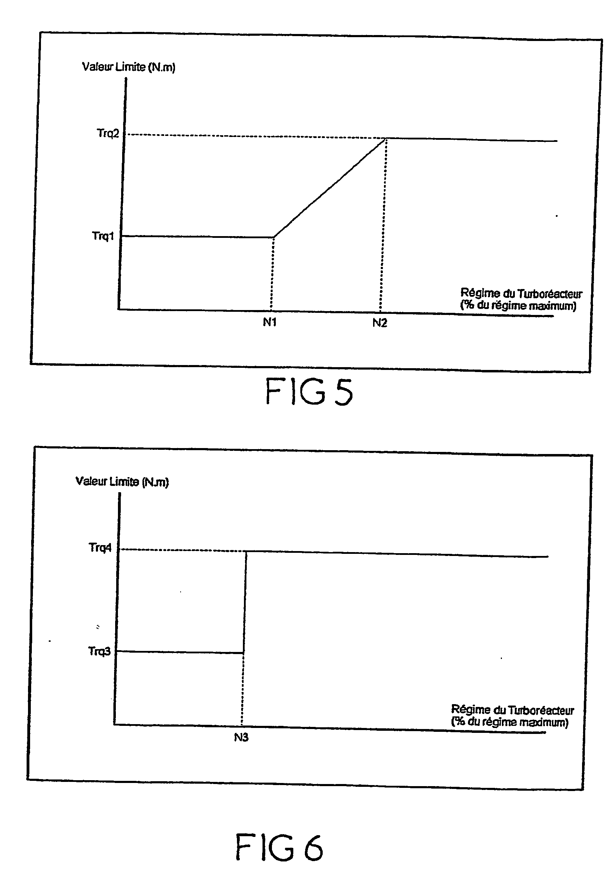

Les figures 5 et 6 montrent, respectivement pour un déploiement et un escamotage de l'inverseur 1, des exemples de profils des valeurs limites maximales de couple autorisées en fonction de la valeur du paramètre représentatif tels que résultant des procédés décrits précédemment et représentés aux figures 3 et 4. Ces profils sont destinés à être programmés dans l'interface de commande 9 et sont utilisés pour déterminer la séquence de fonctionnement appropriée.

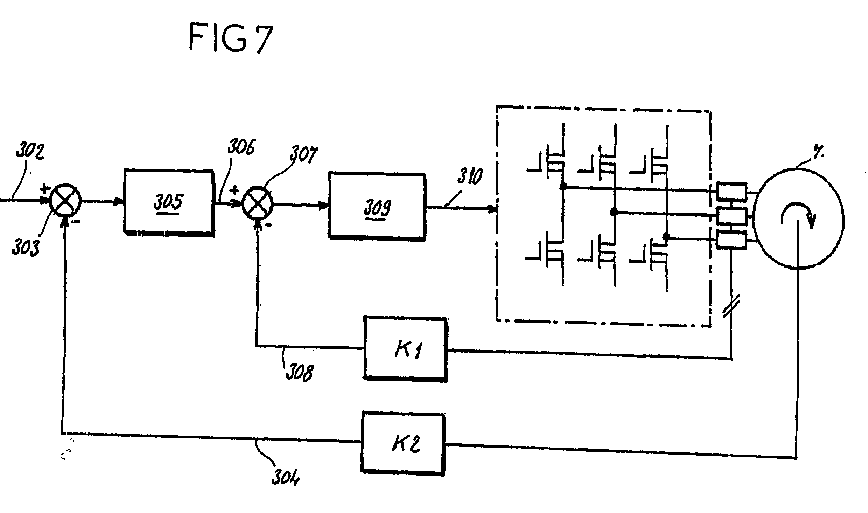

La figure 7 représente, de manière simplifiée, le schéma de principe des principaux circuits d'une interface de commande 9 équipant un inverseur de poussée 1 selon l'invention. L'interface de commande 9 pilote le moteur électrique 7 qui est constitué par un moteur synchrone autopiloté apte à recevoir une commande de couple ou de vitesse.

Un tel moteur électrique 7 est particulièrement bien adapté à un procédé selon l'invention. Son fonctionnement repose sur l'interaction entre un champ magnétique rotorique et un champ magnétique statorique tournant. Dans un tel moteur électrique 7, un capteur détecte la position exacte du rotor et permet à un convertisseur de fréquence de maintenir un angle entre le rotor et le champ tournant statorique égal à 90° de façon à ce que le couple moteur soit toujours maximal. Une modulation de l'amplitude du champ tournant statorique fixe la valeur du couple moteur. Le capteur donne également une information sur la vitesse de rotation du moteur électrique 7.

En fonctionnement, pour que la vitesse reste constante en cas de diminution ou augmentation de charge, il faut diminuer ou augmenter le couple moteur. L'amplitude du champ tournant statorique sera donc réduite ou augmentée mais la fréquence du champ ne sera pas modifiée.

L'interface reçoit une consigne de vitesse 302, à laquelle un comparateur 303 soustrait la vitesse actuelle 304 du moteur électrique 7. La différence entre ces vitesses alimente un régulateur de vitesse 305 qui calcule la réponse appropriée sous forme d'une consigne de couple 306. Cette consigne de couple 306 transite par un comparateur 307 qui lui soustrait le couple actuel 308 du moteur électrique 7. Cette différence est fournie à un régulateur de couple 309 qui délivre la consigne appropriée 310 au moteur électrique 7.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de commande pour l'ouverture ou la fermeture d'un inverseur de poussée (1) de turboréacteur, mettant en oeuvre au moins un capot mobile (2) pouvant être déplacé au moyen d'au moins un moteur électrique (7), **caractérisé en ce qu'**il comprend les étapes suivantes visant à :
- analyser (111, 112, 113, 211, 212) au moins un paramètre représentatif de la pression dans la veine du turboréacteur,
- exécuter une séquence de fonctionnement (130, 140, 150, 230, 240) dans laquelle les paramètres de fonctionnement du moteur électrique (7) sont adaptés à la situation.

2. Procédé selon la revendication 1, **caractérisé en ce que** le paramètre représentatif analysé est obtenu à partir du régime de l'arbre compresseur basse pression du turboréacteur.

3. Procédé selon l'une quelconque des revendications 1 ou 2, **caractérisé en ce que** la séquence de fonctionnement exécutée est choisie parmi au moins deux séquences (130, 140, 150, 230, 240) prédéterminées correspondant respectivement aux cas où le turboréacteur fonctionne à bas régime et à haut régime.

4. Procédé selon l'une quelconque des revendications 1 à 3, **caractérisé en ce que**, lors de l'exécution de la séquence de fonctionnement (130, 140, 150, 230, 240), le moteur électrique (7) délivre un couple inférieur ou égal à une valeur limite maximale.

5. Procédé selon la revendication 4, **caractérisé en ce que** lorsque la valeur du paramètre représentatif du régime du turboréacteur est comprise dans une plage prédéterminée, la valeur limite maximale du couple délivré par le moteur électrique (7) est déterminée par l'application d'une fonction affine à la valeur du paramètre représentatif.

6. Procédé selon l'une quelconque des revendications 3 à 5, **caractérisé en ce que** la séquence de fonctionnement (130, 230) exécutée pour un turboréacteur fonctionnant à bas régime comprend une étape de test (132, 231) de l'état de fonctionnement du moteur électrique (7) qui, en cas de non fonctionnement de ce dernier, entraînera l'application de la séquence de fonctionnement (140, 240) prévue pour un turboréacteur fonctionnant à un régime plus élevé.

7. Procédé selon l'une quelconque des revendications 1 à 6, **caractérisé en ce que**, au moins au début de la séquence de fonctionnement (130, 140, 150), la vitesse du moteur électrique (7) est limitée.

8. Procédé selon l'une quelconque des revendications 1 à 7, **caractérisé en ce que** la séquence de fonctionnement (130, 140, 150) exécutée comprend au moins une étape de contrôle et de régulation de la vitesse.

9. Procédé selon l'une quelconque des revendications 1 à 8, **caractérisé en ce que** la séquence de fonctionnement (130, 140, 150, 230, 240) comprend une boucle de contrôle (163, 241) de l'état de fonctionnement du moteur électrique (7) apte à commander l'arrêt de celui-ci.

10. Procédé selon l'une quelconque des revendications 1 à 9, **caractérisé en ce qu'**il est prévu d'enclencher une séquence de fonctionnement par défaut si le paramètre représentatif ne peut être analysé.

11. Inverseur de poussée (1) comprenant au moins un capot mobile (2) pouvant être déplacé sous l'action d'au moins un moteur électrique (7), **caractérisé en ce que** le moteur électrique est piloté par au moins une interface de commande (9) apte, successivement, à analyser au moins un paramètre représentatif de la pression dans la veine du turboréacteur, et à délivrer au moins une consigne de fonctionnement (310) adaptée.

12. Inverseur (1) selon la revendication 11, **caractérisé en ce que** l'interface de commande (9) est connectée à un boîtier de commande du turboréacteur délivrant le paramètre représentatif.

13. Inverseur (1) selon l'une quelconque des revendications 11 ou 12, **caractérisé en ce que** le moteur électrique est un moteur (7) synchrone autopiloté.

14. Inverseur (1) selon l'une quelconque des revendications 11 à 13, **caractérisé en ce que** le moteur électrique (7) est piloté en couple à vitesse constante.

15. Inverseur selon la revendication 14, **caractérisé en ce que** l'interface de commande (9) comprend des moyens de régulation (309) du couple délivré par le moteur électrique (7).

16. Inverseur (1) selon l'une quelconque des revendications 14 ou 15, **caractérisé en ce que** l'interface de commande (9) est apte à recevoir une consigne de vitesse (302) et à la convertir en une instruction de couple (310) qu'elle délivre au moteur électrique (7).

17. Inverseur selon la revendication 16, **caractérisé en ce que** l'interface de commande (9) comprend des moyens de régulation (305) de la vitesse du moteur électrique (7).

## Patentansprüche

1. Steuerverfahren zum Öffnen oder Schließen eines Schubumkehrers (1) eines Triebwerks, das mindestens eine bewegliche Haube (2) zum Einsatz bringt, die mit Hilfe mindestens eines elektrischen Motors (7) verschoben werden kann, **dadurch gekennzeichnet, dass** es die folgenden Schritte umfasst, die dazu dienen:
- mindestens einen Parameter zu analysieren (111, 112, 113, 211, 212), der für den Druck in der Leitung des Triebwerks repräsentativ ist,
- eine Funktionssequenz (130, 140, 150, 230, 240) durchzuführen, in der die Funktionsparameter des elektrischen Motors (7) an die Situation angepasst sind.

2. Verfahren nach Anspruch 1, **dadurch gekennzeichnet, dass** der analysierte repräsentative Parameter auf der Grundlage der Leistung der Niederdruck-Verdichterwelle des Triebwerks erhalten wird.

3. Verfahren nach einem der Ansprüche 1 oder 2, **dadurch gekennzeichnet, dass** die durchgeführte Funktionssequenz ausgewählt ist aus mindestens zwei vorbestimmten Sequenzen (130, 140, 150, 230, 240), die jeweils den Fällen entsprechen, in dem das Triebwerk mit niedriger Leistung und mit hoher Leistung arbeitet.

4. Verfahren nach einem der Ansprüche 1 bis 3, **dadurch gekennzeichnet, dass** bei der Durchführung der Funktionssequenz (130, 140, 150, 230, 240) der elektrische Motor (7) ein Drehmoment liefert, das geringer als oder gleich wie ein maximaler Grenzwert ist.

5. Verfahren nach Anspruch 4, **dadurch gekennzeichnet, dass**, wenn der Wert des repräsentativen Parameters der Leistung des Triebwerks in einem vorbestimmten Bereich liegt, der maximale Grenzwert des Drehmoments, das an den elektrischen Motor (7) geliefert wird, durch die Anwendung einer linearen Funktion auf den Wert des repräsentativen Parameters bestimmt wird.

6. Verfahren nach einem der Ansprüche 3 bis 5, **dadurch gekennzeichnet, dass** die durchgeführte Funktionssequenz (130, 230) für ein Triebwerk, das mit niedriger Leistung funktioniert, einen Schritt des Testens (132, 231) des Funktionszustands des elektrischen Motors (7) umfasst, der, im Fall der Nicht-Funktion des Letzteren, die Anwendung der Funktionssequenz (140, 240) nach sich zieht, die für ein Triebwerk vorgesehen ist, das mit einer höheren Leistung funktioniert.

7. Verfahren nach einem der Ansprüche 1 bis 6, **dadurch gekennzeichnet, dass** mindestens am Beginn der Funktionssequenz (130, 140, 150) die Geschwindigkeit des elektrischen Motors (7) begrenzt ist.

8. Verfahren nach einem der Ansprüche 1 bis 7, **dadurch gekennzeichnet, dass** die durchgeführte Betriebssequenz (130, 140, 150) mindestens einen Schritt des Steuerns und des Regulierens der Geschwindigkeit umfasst.

9. Verfahren nach einem der Ansprüche 1 bis 8, **dadurch gekennzeichnet, dass** die Funktionssequenz (130, 140, 150, 230, 240) eine Schleife zur Steuerung (163, 241) des Funktionszustands des elektrischen Motors (7) umfasst, sie ausgelegt ist um den Stopp dieses zu steuern.

10. Verfahren nach einem der Ansprüche 1 bis 9, **dadurch gekennzeichnet, dass** vorgesehen ist, einen Standard-Funktionsablauf zu schalten, wenn der repräsentative Parameter nicht analysiert werden kann.

11. Schubumkehrer (1), umfassend mindestens eine bewegliche Haube (2), die unter der Einwirkung mindestens eines elektrischen Motors (7) verschoben werden kann, **dadurch gekennzeichnet, dass** der elektrische Motor durch mindestens eine Steuerschnittstelle (9) geführt wird, die in der Folge ausgelegt ist, um mindestens einen repräsentativen Parameter des Drucks in der Leitung des Triebwerks zu analysieren und mindestens einen Funktions-Einstellwert (310) zu liefern.

12. Umkehrer (1) nach Anspruch 11, **dadurch gekennzeichnet, dass** die Steuerschnittstelle (9) mit einem Steuergehäuse des Triebwerks verbunden ist, das den repräsentativen Parameter liefert.

13. Umkehrer (1) nach einem der Ansprüche 11 oder 12, **dadurch gekennzeichnet, dass** der elektrische Motor (7) ein selbstgesteuerter synchroner Motor ist.

14. Umkehrer (1) nach einem der Ansprüche 11 bis 13, **dadurch gekennzeichnet, dass** der elektrische Motor (7) mit einem Drehmoment mit konstanter Geschwindigkeit geführt wird.

15. Umkehrer nach Anspruch 14, **dadurch gekennzeichnet, dass** die Steuerschnittstelle (9) Mittel zur Regulierung (309) des Drehmoments umfasst, das durch den elektrischen Motor (7) geliefert wird.

16. Umkehrer (1) nach einem der Ansprüche 14 oder 15, **dadurch gekennzeichnet, dass** die Steuerschnittstelle (9) ausgelegt ist, um einen Geschwindigkeits-Einstellwert (302) zu erhalten und ihn in eine Drehmomentanweisung (310) umzuwandeln, die er an den elektrischen Motor (7) liefert.

17. Umkehrer nach Anspruch 16, **dadurch gekennzeichnet, dass** die Steuerschnittstelle (9) Mittel zur Regulierung (305) der Geschwindigkeit des elektrischen Motors (7) umfasst.

## Claims

1. A control method for opening or closing a turbojet engine thrust reverser (1), implementing at least one movable cowl (2) which may be displaced by means of at least one electric motor (7), **characterized in that** it comprises the following steps aiming at:
- analyzing (111, 112, 113, 211, 212) at least one parameter representative of the pressure in the flow path of the turbojet engine,
- executing an operation sequence (130, 140, 150, 230, 240) in which the operation parameters of the electric motor (7) are adapted to the situation.

2. The method according to claim 1, **characterized in that** the analyzed representative parameter is obtained from the rate of the low-pressure compressor shaft of the turbojet engine.

3. The method according to any one of claims 1 or 2, **characterized in that** the executed operation sequence is selected from at least two predetermined sequences (130, 140, 150, 230, 240) corresponding respectively to the cases where the turbojet engine operates at low rate and high rate.

4. The method according to any one of claims 1 to 3, **characterized in that**, during the execution of the operation sequence (130, 140, 150, 230, 240), the electric motor (7) outputs a torque lower than or equal to a maximum limit value.

5. The method according to claim 4, **characterized in that**, when the value of the parameter representative of the rate of the turbojet engine is comprised within a predetermined range, the maximum limit value of the torque output by the electric motor (7) is determined by the application of a affine function to the value of the representative parameter.

6. The method according to any one of claims 3 to 5, **characterized in that** the executed operation sequence (130, 230) for a turbojet engine operating at low rate comprises a testing step (132, 231) of the operation condition of the electric motor (7) which, in case of non-operation of the latter, will cause the application of the operation sequence (140, 240) provided for a turbojet engine operating at a higher rate.

7. The method according to any one of claims 1 to 6, **characterized in that**, at least at the beginning of the operation sequence (130, 140, 150), the speed of the electric motor (7) is limited.

8. The method according to any one of claims 1 to 7, **characterized in that** the executed operation sequence (130, 140, 150) comprises at least a step of controlling and regulating the speed.

9. The method according to any one of claims 1 to 8, **characterized in that** the operation sequence (130, 140, 150, 230, 240) comprises a control loop (163, 241) of the operation condition of the electric motor (7) able to control the stop thereof.

10. The method according to any one of claims 1 to 9, **characterized in that** it is expected to engage a default operation sequence if the representative parameter cannot be analyzed.

11. A thrust reverser (1) comprising at least one movable cowl (2) which may be displaced under the action of at least one electric motor (7), **characterized in that** the electric motor is driven by at least one control interface (9) able, successively, to analyze at least one parameter representative of the pressure in the flow path of the turbojet engine, and to output at least one adapted operation setpoint (310).

12. The thrust reverser (1) according to claim 11, **characterized in that** the control interface (9) is connected to a control unit of the turbojet engine outputting the representative parameter.

13. The thrust reverser (1) according to any one of claims 11 or 12, **characterized in that** the electric motor is a synchronous self-driven motor (7).

14. The thrust reverser (1) according to any one of claims 11 to 13, **characterized in that** the electric motor (7) is torque driven at constant speed.

15. The thrust reverser according to claim 14, **characterized in that** the control interface (9) comprises regulation means (309) of the torque output by the electric motor (7).

16. The thrust reverser (1) according to any one of claims 14 or 15, **characterized in that** the control interface (9) is able to receive a speed setpoint (302) and to convert it into a torque instruction (310) that it outputs to the electric motor (7).

17. The thrust reverser according to claim 16, **characterized in that** the control interface (9) comprises regulating means (305) of the speed of the electric motor (7).
